# EUROPEAN PATENT APPLICATION

(11) **EP 3 009 980 A1**
(43) Date of publication of application: **20.04.2016**
(21) Application number: 14810970.5
(22) Date of filing: 05.06.2014
(51) Int. Cl.: G06Q 50/10

(54) **ONLINE LOTTERY SYSTEM FOR VARYING PROBABILITY OF WINNING AND METHOD THEREFOR**

(30) Priority: 10.06.2013 KR 20130065686
(71) Applicant: Redduck Inc., Seoul 135-873 (KR)
(72) Inventor: KIM, Jung Hoon, Seongnam-si Gyeonggi-do 463-902 (KR)
(74) Representative: Beetz & Partner mbB
(86) International application number: PCT/KR2014/004991
(87) International publication number: WO 2014/200227

(57) **Abstract**

The present invention relates to an online lottery system for varying a probability of winning and a method therefor, and more particularly, to an online lottery system for varying a probability of winning, which can increase the probability of winning for desired item contents by providing item contents used in an online game a lottery scheme and excluding undesired item contents according to user selection and a method therefor. According to the present invention, since the item content that the user does not want is excluded from a lottery event, the probability of winning for the item content that the user desires can be increased, thereby increasing user satisfaction for the lottery, and arousing the interest of the user due to the increase of the probability of winning so as to induce active participation of the user in the lottery.

## Description

### [CROSS-REFERENCE TO RELATED APPLICATION]

This application claims the benefit of Korean Application No. 10-2013-0065686 filed on June 10, 2013 with the Korean Intellectual Property Office, the disclosure of which is incorporated herein by reference.

### [DESCRIPTION]

### [Invention Title]

### ONLINE LOTTERY SYSTEM FOR VARYING PROBABILITY OF WINNING AND METHOD THEREFOR

### [Technical Field]

The present invention relates to an online lottery system for varying a probability of winning and a method therefor and, more specifically, to an online lottery system for varying a probability of winning and a method therefor, which provide item contents used in an online game by a lottery scheme and can increase the probability of winning for a desired item content by excluding an undesired item content according to the selection of a user.

### [Background Art]

With the development of an ultrahigh Internet communication network, various types of online games have been released and most game genres which have gotten the limelight are included in a real-time role playing game (hereinafter, referred to as RPG) or a first personal shooting game (hereinafter, FPS).

The online games of the RPG and FPS genres not only cause competitions among players but also in the online games, a plurality of players form a group on a game, such as a clan or a party may compete other groups. In this case, not only a combination among the players but also individual capabilities play an important part in the competiveness of the group.

In this case, the individual capabilities significantly depend on an operation in the game and items possessed by the players. In particular, as the items, enormous items are provided due to characteristics of the RPG and FPS genres and characteristics and types of the items based on creation of a game producer are also limitless. Further, the items grant special capabilities while sports games or matchup games have appeared in addition to the RPG and FPS genres and utilization areas have been expanded without distinction of the genre.

At present, a lot of on online lottery systems which provide the item contents by a lottery scheme appear by interworking with the online game and the players participate in the online lottery system to obtain high-class item contents are difficult to obtain in the game or having a capability value measured in an online game which a game production company limitatively produces for securing distinctiveness from and competitiveness with other players.

However, the online lottery system allocates a minority of high-class item contents to one lottery event in order not to hinder a game balance and allocates a majority of general item contents having a low capability value, which can be easily obtained in the online game in spite of not participating in the lottery scheme to prevent high-class item contents from being indiscriminately distributed.

As a result, a user who does not have lottery luck in spite of investing too much cost cannot obtain desired high-class item contents, and as a result, there is a concern that a user who has low efficiency compared with investment gradually will avoid the corresponding online lottery system and avoid participation in the online game itself.

Moreover, when another user who invests small cost easily obtains the high-class item contents, the avoidance phenomenon can be further accelerated and exert a negative influence even on the online game itself.

Further, the high-class item contents which are duplicated among different lottery events can be present, and as a result, there is a side effect that a case where the high-class item contents which are duplicated with high-class item contents which are previously won are won depreciates as compared with a case where the general item contents are won even though the high-class item contents are won.

Moreover, since the lottery event includes even high-class item contents which are not desired by the user, when high-class item contents desired by the user are limited, a probability of winning for the high-class contents is further lowered. Therefore, cost which the user expends in order to obtain the desired high-class item contents is considerable, and as a result, the user further avoids participation in the lottery.

### [Prior Art Document]

### [Patent Document]

(Patent Document 1) Korean Patent No. 10-1007195

### [Disclosure]

### [Technical Problem]

In order to solve the aforementioned problem, an object of the present invention is to provide a system that increases a probability of winning for desired item contents as compared with cost input into a lottery event by excluding item contents not desired by a user to increase satisfaction and loyalty of the user for a lottery.

Further, an object of the present invention is to prevent a phenomenon in which a case where high-class item contents are won depreciates as compared with a case where general item contents are won by preventing high-class item contents which are duplicated with high-class item contents which are previously won from being generated according to investment of the user.

### [Technical Solution]

In order to achieve the object, an online lottery system which interworks with a game content providing server providing item contents used in an online game to provide the item contents by a lottery scheme according to an embodiment of the present invention includes: a lottery event generating unit generating lottery event information by extracting the plurality of item contents to be provided through a lottery; a lottery event providing unit providing one or more lottery event information generated by controlling the lottery event generating unit to each client terminal; and a lottery control unit increasing the probability of winning for the item contents which is the lottery target by excluding from a lottery target one or more item contents selected according to user input information of the client terminal among the plurality of item contents included in the lottery event information with respect to the client terminal that participates in the lottery depending on the lottery event information.

In this case, the lottery control unit may randomly automatically select one or more item contents with respect to the item contents as the lottery target and provide the selected item contents as winning information to the client terminal that participates in the lottery.

Further, the lottery control unit may register the item contents provided as the winning information in member information stored in a member server to use the item contents in an online game.

Moreover, the lottery control unit may reset the lottery event information when all of the item contents included in the lottery event information are exhausted or the client terminal that participates in the lottery completes the lottery event depending on the lottery event information.

Besides, the plurality of item contents may be constituted by different item contents or at least one item content is constituted by different item contents.

Moreover, the lottery event providing unit may provide, to each client terminal, information on the item contents included in the lottery event information.

In order to achieve the object, an online lottery method of an online lottery server which interworks with a game content providing server providing item contents used in an online game to provide the item contents by a lottery scheme according to an embodiment of the present invention includes: a first step of generating lottery event information by extracting the plurality of item contents to be provided through a lottery; a second step of providing one or more lottery event information generated through the first step to each client terminal; and a lottery control unit increasing the probability of winning for the item contents which is the lottery target by excluding from a lottery target one or more item contents selected according to user input information of the client terminal among the plurality of item contents included in the lottery event information with respect to the client terminal that participates in the lottery depending on the lottery event information.

Meanwhile, in order to achieve the object, an online lottery system which interworks with a game content providing server providing item contents used in an online game to provide the item contents by a lottery scheme according to another embodiment of the present invention includes: a lottery event generating unit generating lottery event information by matching one or more item contents with one or more capsules among a predetermined number of capsules; a lottery event providing unit providing one or more lottery event information generated by controlling the lottery event generating unit to each client terminal; and a lottery control unit excluding one or more capsules from a lottery according to user input information of the client terminal so as to increase winning probabilities for the item contents with respect to a client terminal that participates in the lottery depending on the lottery event information.

In this case, the lottery control unit may provide the matched item content as winning information according to whether a capsule selected by performing the lottery for the residual capsules other than the capsules excluded from the lottery matching an item content.

Further, the lottery control unit may register the item contents provided as the winning information in member information stored in a member server to use the item contents in an online game.

Moreover, the lottery control unit may perform the lottery by selecting at least one capsule according to selection information of the client terminal or randomly automatically selecting at least one capsule.

Besides, the lottery control unit may remove the capsule excluded from the lottery or prevent the corresponding capsule from being selected.

Furthermore, the lottery control unit may reset the lottery event information when all of the item contents included in the lottery event information are won or the client terminal completes the lottery event depending on the lottery event information.

Further, the lottery event generating unit may match a plurality of different item contents with one or more capsules, respectively to generate the lottery event information.

Moreover, the lottery control unit may exclude one or more capsules matching the item contents selected according to the user input information from the lottery to increase winning probabilities for other item contents.

Further, the lottery event providing unit may provide, to each client terminal, information on the item contents included in the lottery event information.

Besides, in the item contents, any one of a plurality of levels classified according to capability values granted to the game content providing server may be previously set, and the lottery event generating unit may match the plurality of item contents with the capsules, respectively to generate the lottery event information and generate the lottery event information so that the lottery event information includes at least one of item contents corresponding to different levels from other item contents.

Moreover, the lottery control unit may exclude capsules matching one or more item contents corresponding to a level selected according to the user input information from the lottery.

Further, the item contents may be high-class item contents of which capability values measured in the online game are equal to or more than a predetermined value.

Meanwhile, in order to achieve the object, an online lottery method of an online lottery server which interworks with a game content providing server providing item contents used in an online game to provide the item contents by a lottery scheme according to another embodiment of the present invention includes: a first step of generating lottery event information by matching one or more item contents with one or more capsules among a predetermined number of capsules by interworking the game content providing server; a second step of providing one or more lottery event information generated through the first step to each client terminal; and a third step of receiving, from the clinent terminal, user input information for excluding one or more capsules from the lottery so as to increase the probability of winning of the selected capsule with respect to the client terminal that participates in the lottery depending on the lottery event information.

### [Advantageous Effects]

According to the present invention, since a probability of winning for item contents desired by a user can be increased by excluding item contents not desired by the user from a lottery event, lottery satisfaction of the user is enhanced and an interest of the user depending on an increase in probability of winning is caused, thereby inducing active lottery participation.

Further, according to the present invention, when the number of the item contents excluded from a lottery is increased or a lot means which matches the item contents is increased, the item contents desired by the user are allowed to be particularly won to satisfy an expectation value of the user depending on an increase in winning probability and increases loyalty to a lottery system.

Moreover, according to the present invention, the item contents not desired by the user can be selectively excluded from a lottery event in which various types of a plurality of item contents coexist to prevent a winning value of the item contents from being deteriorated as the won item contents are duplicated with the existing previously won item contents even though item contents which have a scarcity value are won and a probability of winning for the desired item contents can be concentratively increased, thereby significantly enhancing satisfaction of the user.

Besides, according to the present invention, as the item contents excluded from the lottery increase, the item contents desired by the user are allowed to be particularly won, thereby significantly enhancing efficiency as compared with cost consumed in the lottery.

### [Description of Drawings]

FIG. 1 is a configurational environment diagram of an online lottery system for varying a probability of winning according to an embodiment of the present invention.
FIG. 2 is a configuration diagram of a lottery server according to the embodiment of the present invention.
FIG. 3 is a configuration diagram of providing lottery event information according to the embodiment of the present invention.
FIG. 4 is a detailed configuration diagram of a lottery control unit according to the embodiment of the present invention.
FIG. 5 is a configuration diagram of an interface of an output lottery event and an exclusion scheme of the item contents for varying the probability of winning according to the embodiment of the present invention.
FIG. 6 is a configuration diagram of a lottery scheme for varying a probability of winning according to an embodiment of the present invention.
FIG. 7 is a configuration diagram of providing won item contents according to the embodiment of the present invention.
FIG. 8 is a flowchart of an online lottery method for varying a probability of winning according to an embodiment of the present invention.
FIG. 9 is a configuration diagram of an interface of an output lottery event and a capsule exclusion scheme for varying the probability of winning according to another embodiment of the present invention.
FIG. 10 is a configuration diagram of a lottery scheme for varying a probability of winning according to another embodiment of the present invention.
FIGS. 11 and 12 are configuration diagrams of a capsule exclusion scheme for varying a probability of winning according to another embodiment of the present invention.
FIG. 13 is a flowchart of an online lottery method for varying a probability of winning according to another embodiment of the present invention.

### [Mode for Invention]

An online lottery system for varying a probability of winning according to the present invention can increase a probability of winning for item contents desired by a user by item contents or a lot means not associated with item contents which the user desires to win, and as a result, lottery satisfaction of the user can be enhanced and an interest of the user depending on an increase in probability of winning can be caused to increase participation in an online lottery service.

Hereinafter, an online lottery system for varying a probability of winning according to the present invention will be described in detail with reference to the accompanying drawings.

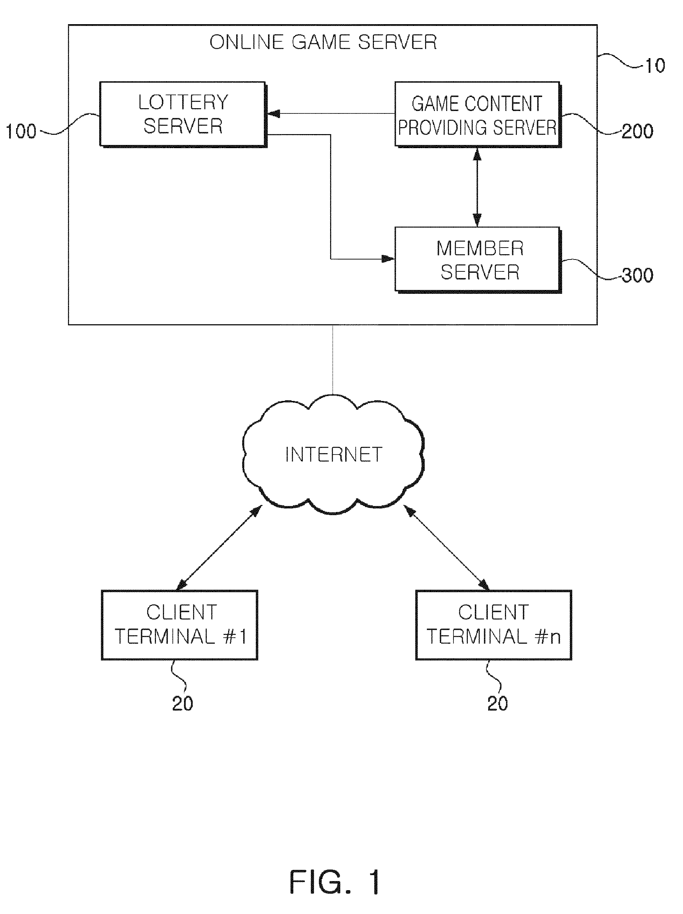

FIG. 1 is a configurational environment diagram of an online lottery system for varying a probability of winning according to an embodiment of the present invention and as illustrated in FIG. 1, an online game server 10 which includes the item contents therein may be constituted by a game content providing server 200 providing contents associated with various games, a member server 300 accessing the online game server to manage information of members receiving the game contents, and a lottery server 100 providing an online lottery service to a client terminal 20 using the members by interworking with the game content providing server 200 and the member server 300.

When a process in which the client terminal 20 accesses the lottery server 100 is described based on the constitution, the client terminal 20 transmits log-in information to the online game server 10 via the Internet and the game content providing server 200 authenticates a user of the client terminal 20 based on the log-in information and when the authentication is verified, the game content providing server 200 provides various game contents to the user.

In this case, the game content providing server 200 may register link information to link the access to the lottery server 100 on a website provided to the client terminal 20 and the client terminal 20 may access the lottery server 100 through the link information.

Meanwhile, in order to register information transmitted and received between the client terminal 20 which participates in the online item lottery service and the lottery server 100 and apply the registered information to the game content providing server 200, the member server 300 may register the transmitted and received information in the member information of the user corresponding to the log-in information of the client terminal 20 and provide the registered information to the game content providing server 200.

The lottery server 100 provides the online lottery service to the client terminal 20 when the access by the client terminal 20 is verified.

Based on the constitution, the lottery server 100 according to the embodiment of the present invention excludes the item contents not desired by the user or a lot means which matches the item contents which are not desired to increase the probability of winning of the desired item contents.

First, a configuration of varying a probability of winning of the item contents desired by the user through exclusion of the item contents will be described in detail.

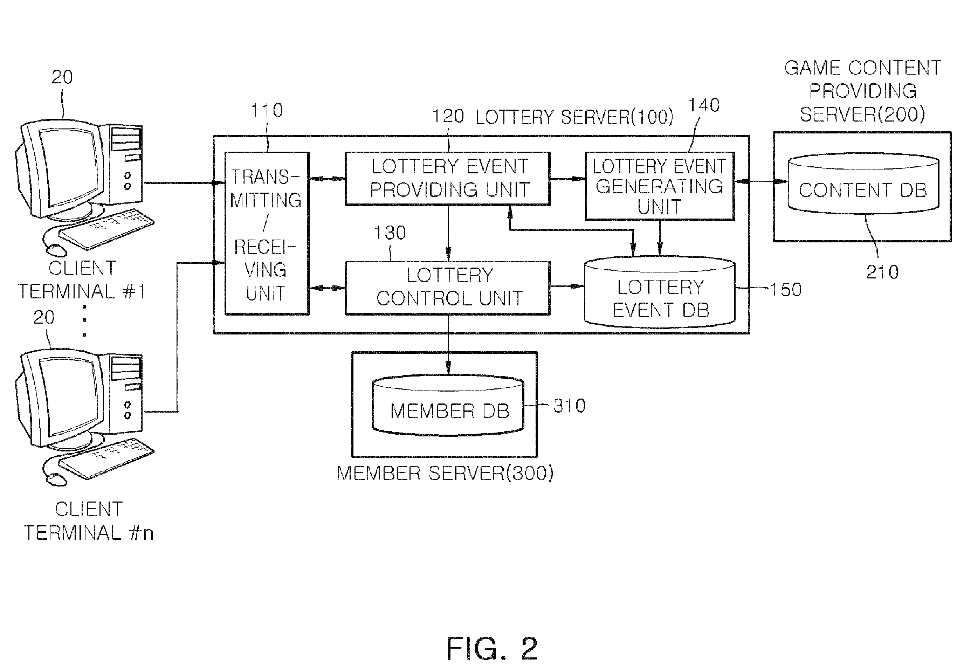

FIG. 2 is a configuration diagram of a lottery server according to the embodiment of the present invention and as illustrated in FIG. 2, the lottery server 100 may include a transmitting/receiving unit 110, a lottery event providing unit 120, a lottery control unit 130, a lottery event generating unit 140, and a lottery event DB 150.

In respect to each client terminal 20 that accesses the lottery server through the transmitting/receiving unit 110, the lottery event providing unit 120 controls the lottery event generating unit 140 to generate lottery event information and provide the generated lottery event information to each client terminal 20. In this case, the transmitting/receiving unit 110 may be included in the lottery event providing unit 120 and the lottery control unit 130 as necessary.

The lottery event generating unit 140 selects a predetermined number of item contents among a plurality of item contents stored in the content DB 210 of the game content providing server 200 to generate the lottery event information having the selected item contents as a lottery target and store the generated lottery event information in the lottery event DB 150.

In this case, the lottery event generating unit 140 may constitute at least one of the item contents included in the lottery event information by high-class item contents of which a capability value measured in an online game is equal to or more than a predetermined value. As a result, item contents which have scarcity are provided as a lottery product to actively induce the user to participate in the lottery.

Further, the lottery event generating unit 140 may constitute some of the item contents included in the lottery event information by different types of item contents and constitute some item contents by different item contents.

Moreover, the lottery event generating unit 140 may differently constitute the number of item contents included in the lottery event information, and as a result, the number of item contents included in some lottery event information may be configured differently from the number of item contents included in another lottery event information.

The lottery event providing unit 120 may provide a list regarding a plurality of lottery event information stored in the lottery event DB 150 to a plurality of client terminals 20 that access the lottery server 100 through the transmitting/receiving unit 110.

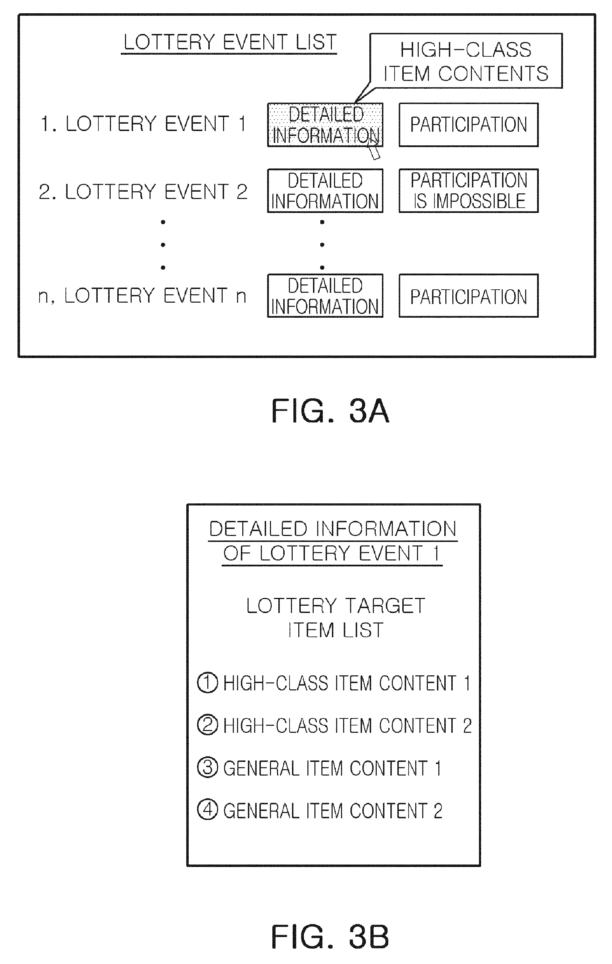

As one example, as illustrated in FIG. 3A, the lottery event providing unit 120 may provide a list of lottery events depending on the lottery event information and provide detailed information related to item contents included in each lottery event.

Further, when a plurality of item contents are included in the lottery event information as illustrated in FIG. 3B, the lottery event providing unit 120 may provide information on each item content and provide attribute information granted in the online game to each item content.

As a result, each client terminal 20 accesses the lottery event depending on the lottery event information by selecting any one of the lottery event information included in the list to participate the lottery event and the user of the client terminal 20 may obtain the desired item contents by participating in the lottery event including the item contents desired by the user.

The lottery event providing unit 120 matches the lottery event information selected by the client terminal 20 with the corresponding client terminal 20 and transmits the matched lottery event information to the lottery control unit 130 and the lottery control unit 130 performs a lottery using the lottery event information to provide winning information to the client terminal corresponding to the lottery event information through the transmitting/receiving unit 110.

In this case, the lottery event providing unit 120 may restrict only one client terminal 20 to participate in one lottery event information, and as a result, another client terminal other than a client terminal that participates in a lottery event depending on specific lottery event information may be restricted not to participate the same lottery event depending on the specific lottery event information.

Meanwhile, in respect to the client terminal 20 that participates in the lottery event depending on the lottery event information, the lottery control unit 130 may provide item contents won by randomly automatically drawing the item contents included in the lottery event information to the client terminal 20 as the winning information.

Further, the lottery control unit 130 registers the item contents provided as the winning information in member information corresponding to the client terminal in the member information stored in the member DB 310 of the member server 300 to allow the user of the client terminal 20 to use the won item contents in the online game.

Moreover, when the lottery event information is allocated to any one client terminal 20 through the lottery event providing unit, the lottery control unit 130 updates the lottery event DB 150 to restrict another client terminal to participate in the same lottery event information.

Further, when all of the item contents included in the lottery event information are exhausted through the exclusion or winning or the client terminal completes the lottery event depending on the lottery event information, the lottery control unit 130 resets the lottery event information to update the list stored in the lottery event DB 150.

Based on the configuration, the lottery control unit 130 may be configured to increase the probability of winning of the item contents desired by the user by excluding the item contents not desired by the user among the plurality of item contents included in the lottery event depending on the lottery event information.

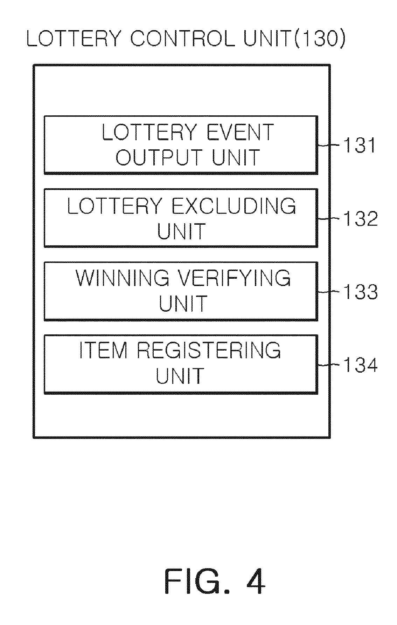

When the configuration therefor is described in detail through FIGS. 4 to 6, first, FIG. 4 is a diagram illustrating a detailed configuration of the lottery control unit 130 and the lottery control unit 130 may include a lottery event output unit 131, a lottery excluding unit 132, a lottery verifying unit 133, and an item registering unit 134.

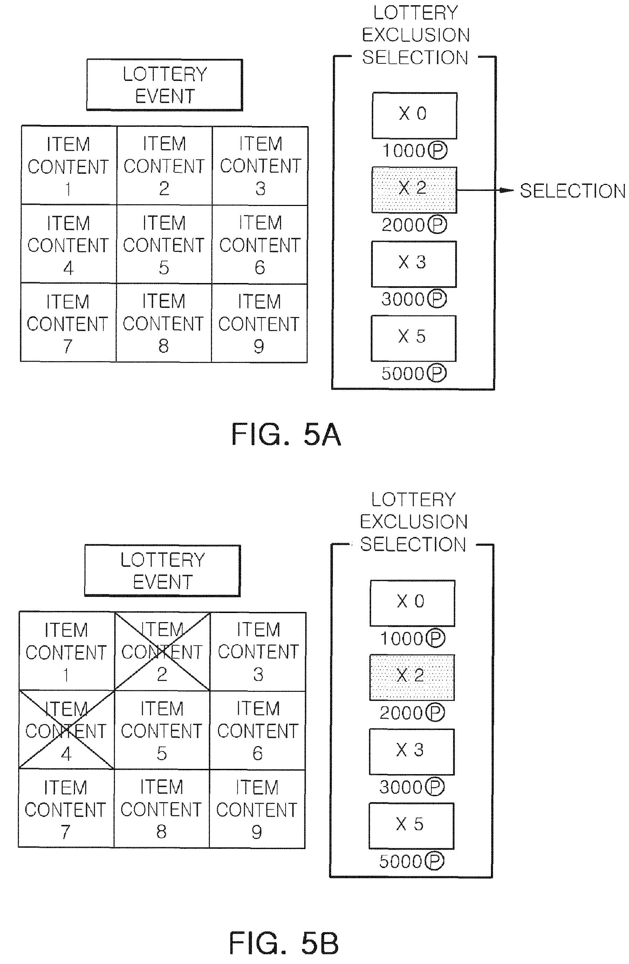

The lottery event output unit 131 may provide the lottery event depending on the lottery event information to the corresponding client terminal 20 and as illustrated in FIG. 5A, the lottery event output unit 131 may output the plurality of item contents included in the lottery event information on a screen of the client terminal.

In this case, the lottery excluding unit 132 may provide a user interface for excluding the item contents not desired by the user among the plurality of item contents included in the lottery event information from the lottery.

As a result, the lottery excluding unit 132 may receive the item contents not desired by the user through user input information of the client terminal through the user interface.

The user interface may be configured to receive the number of item contents excluded from the lottery as illustrated in FIG. 5A and predetermined game money may be previously set according to the number of the excluded item contents.

As a result, the lottery excluding unit 132 providing the user interface may receive number information regarding the number of the item contents excluded from the lottery according to user input information of the client through the user interface and charge the previously set game money to correspond to the client terminal according to the received number information.

In this case, the game money may be goods which are commonly used in the online game and the client terminal 20 may obtain the game money through charged payment using an online payment module supported in the online game server or through playing of the online game. Various known schemes may be applied to the charging and the charging is not limited to the aforementioned scheme.

As a result, the client terminal 20 may increase the probability of winning for the item contents desired by the user by using as the lottery target the residual item contents other than the item contents not desired by the user by paying a predetermined expense.

Further, the user interface may receive selection information related to the item contents excluded from the lottery according to the number information among the plurality of item contents output through the lottery event output unit 131 and the lottery excluding unit 132 may exclude the item contents selected according to the selection information received through the user interface from the lottery as illustrated in FIG. 5B.

In this case, the lottery excluding unit 132 may randomly select item contents to be excluded from the lottery according to the number of item contents according to the number information without receiving the selection information and exclude the selected item contents from the lottery.

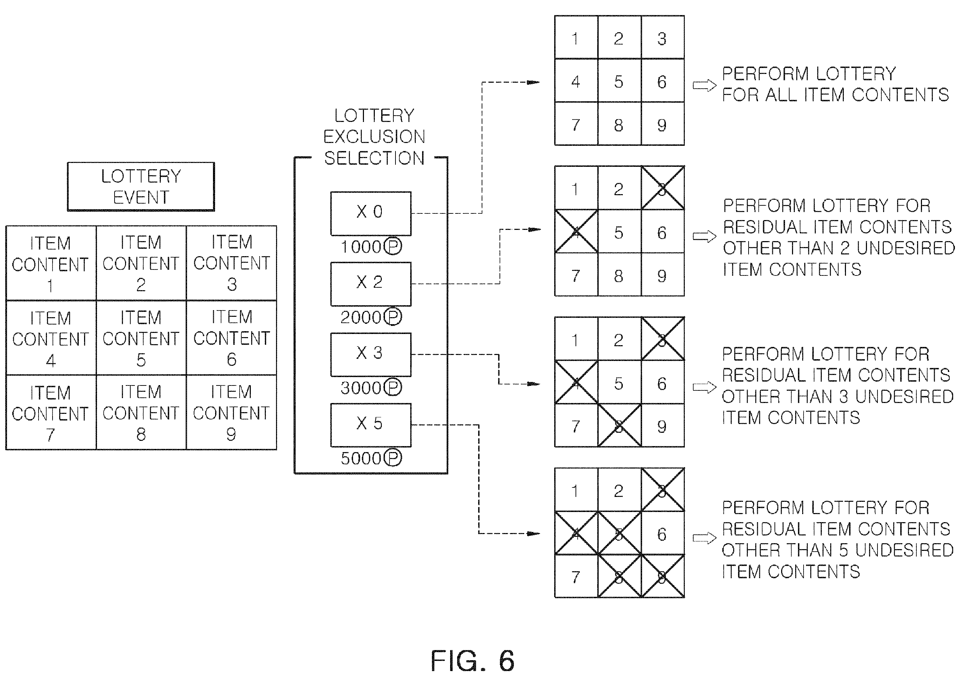

As described above, the lottery excluding unit 132 may receive the number information related to the number of item contents to be excluded from the lottery through the user interface as illustrated in FIG. 6 and set as the lottery target the residual item contents which remain after excluding the item contents selected according to the number information from the lottery.

As one example, when the user intends to exclude three item contents from lottery event information including 9 item contents as illustrated in FIG. 6, the lottery excluding unit 132 may receive number information related to 3 item contents to charge game money corresponding to the number information to the client terminal that participates in the lottery event information and exclude 3 item contents selected according to user input among 9 item contents from the lottery and set the residual item contents as the lottery target.

In this case, when 0 is input as the number information, the lottery excluding unit 132 may set all item contents as the lottery target without excluding the item contents.

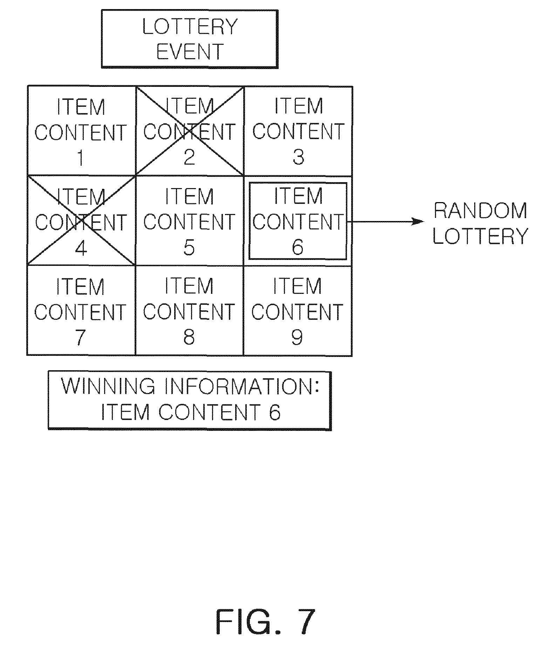

Meanwhile, the winning verifying unit 133 may randomly automatically select one or more item contents with respect to one or more item contents set as the lottery target through the lottery excluding unit 132 as illustrated in FIG. 7 and provide the selected item contents to the client terminal as the winning information.

As one example, as illustrated in FIG. 7, the winning verifying unit 133 sets as the lottery target the residual item contents other than item contents 2 and 4 excluded from the lottery through the lottery excluding unit 132 and provide as the winning information item content 6 which is won according to a result of randomly automatically selecting at least one of the residual item contents to the client terminal that participates in the lottery event depending on the lottery event information.

Meanwhile, the item registering unit 134 registers the item contents corresponding to the winning information in the member DB 310 storing the member information corresponding to the client terminal to allow the user of the client terminal to use the item contents provided as the winning information in the online game.

As described above, according to the present invention, the item contents which are not desired by the user among the plurality of item contents included in the lottery event information are excluded from the lottery to increase the winning probabilities for the residual item contents as the lottery target and the item contents excluded from the lottery are selected by the user through the user input to prevent users of client terminals that participate in different lottery event information from duplicatively winning the same item contents.

Further, the lottery control unit 130 may exclude the item contents according to the user input repeatedly until the plurality of item contents included in one lottery event are excluded from the lottery target or are won, and as a result, all of the item contents are exhausted. Therefore, the user may particularly obtain the desired item contents through excluding the undesired item contents.

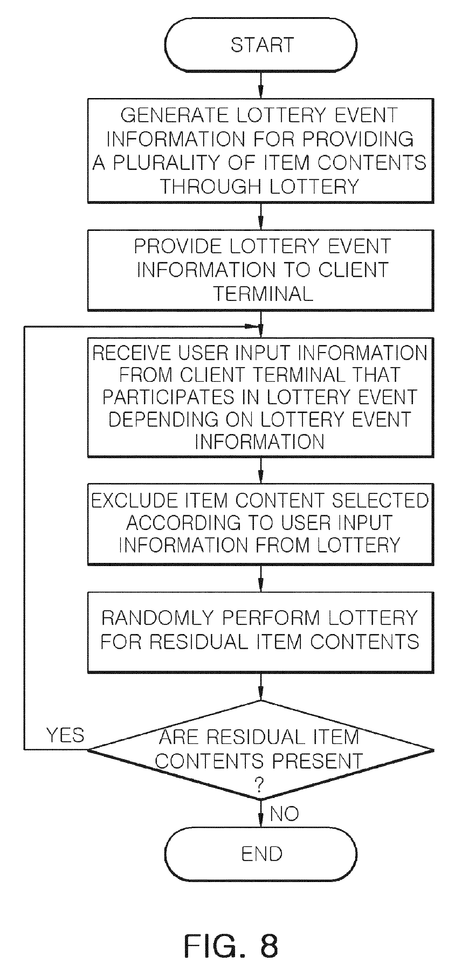

FIG. 8 is a flowchart of the online lottery method according to an embodiment of the present invention and as illustrated in FIG. 8, the lottery event generating unit 140 extracts the plurality of item contents to be provided through the lottery from the content DB 210 of the game content providing server 200 to generate the lottery event information.

Thereafter, the lottery event providing unit 120 provides the lottery event information to each client terminal, and as a result, the lottery control unit 130 executes the lottery with respect to the client terminal that participates in the lottery event depending on the lottery event information based on the lottery event information.

The lottery control unit 130 may exclude from the lottery target one or more item contents selected according the user input information of the client terminal among the plurality of item contents included in the lottery event information with respect to the client terminal that participates in the lottery event depending on the lottery event information.

As a result, the lottery control unit 130 randomly automatically draws the residual item contents by subtracting the item contents excluded from the lottery target among the plurality of item contents included in the lottery event as the lottery target.

Thereafter, the lottery control unit 130 registers the won item contents in the member information corresponding to the user of the client terminal to use the item contents which are won in the online game.

Next, the lottery control unit 130 may determine whether the residual item contents other than the item contents which are excluded or won are present in the lottery event depending on the lottery event information and when the residual item contents are present, the lottery control unit 130 may repeat the aforementioned process by repeatedly receiving the user input information from the client terminal. In this case, the lottery control unit 130 may complete the lottery event when there is no residual item content and complete the lottery event even when the client terminal completes the access to the lottery event.

Meanwhile, in the aforementioned configuration, the embodiment in which the residual item contents which remain after excluding the item contents not desired by the user are directly set as the lottery target has been described, but in addition to the aforementioned configuration, the online lottery system for varying the probability of winning according to the present invention may be configured to match the item contents and the lot means such as a capsule and exclude the lot means which matches the undesired item contents to increase the probability of winning of the desired item contents.

In this case, as the lot means used for the lottery described below, the capsule is described, but various lot means (a ticket, a number, and the like) to which the lottery scheme is applied may be adopted instead of the capsule and the lot means is not limited thereto.

When the configuration therefor is described by referring back to FIG. 2, the constitutions of the lottery event providing unit 120 and the lottery control unit 130 are described above and the lottery event generating unit 140 may generate the lottery event information by matching one or more item contents among the plurality of item contents stored in the content DB 210 of the game content providing server 200 and one or more capsules among a predetermined number of capsules constituting the lottery event information according to the control of the lottery event providing unit 120 and may store the lottery event information in the lottery event DB 150.

In this case, the lottery event generating unit 140 may extract the item contents as high-class item contents of which capability values measured in the online game is equal to or more than a predetermined value and match the extracted high-class item contents with one or more capsules. As a result, item contents which have scarcity are provided as a lottery product to actively induce the user to participate in the lottery.

Besides, the lottery event generating unit 140 matches the plurality of item contents with one or more capsules constituting the lottery event information or matches the lottery event information with each capsule constituting the lottery event information one to one to generate the lottery event information and in this case, some of the plurality of item contents are constituted by the high-class item contents and some residual item contents may be constituted by general item contents of which the capability values are equal to or less than the predetermined value. In this case, the lottery event generating unit 140 constitutes the high-class item contents and the general item contents by different types of item contents to generate the lottery event information.

The lottery event providing unit 120 may provide a list regarding a plurality of lottery event information stored in the lottery event DB 150 to a plurality of client terminals 20 that access the lottery server 100 through the transmitting/receiving unit 110 as described in FIG. 3.

As a result, each client terminal 20 selects any one of the lottery event information included in the list to participate the lottery event depending on the lottery event information and the user of the client terminal 20 may obtain the desired item contents by participating in the lottery event including the item contents desired by the user.

The lottery event providing unit 120 matches the lottery event information selected by the client terminal 20 with the corresponding client terminal 20 and transmits the matched lottery event information to the lottery control unit 130 and the lottery control unit 130 performs a lottery using the lottery event information to provide winning information to the client terminal corresponding to the lottery event information through the transmitting/receiving unit 110.

Meanwhile, in respect to the client terminal 20 that participates in the lottery event depending on the lottery event information, the lottery control unit 130 may provide the item contents matching the selected capsule to the client terminal 20 as the winning information according to whether the capsule selected by drawing the capsule selected according to the selection information of the client terminal 20 matches the item contents.

Further, the lottery control unit 130 registers the item contents provided as the winning information in member information corresponding to the client terminal in the member information stored in the member DB 310 of the member server 300 to allow the user of the client terminal 20 to use the won item contents in the online game.

Meanwhile, the lottery control unit 130 excludes one or more capsules which do not match the item contents or match the item contents not desired by the user among a plurality of capsules included in the lottery event information from the lottery to increase the probability of winning for the item contents desired by the user, in order to increase the probability of winning for the item contents of the client terminal 20 that participates in the lottery event according the lottery event information.

Further, predetermined game money may be previously set according to the number of excluded capsules and the lottery control unit 130 may charge the game money corresponding to the number of excluded capsules according to the user input information received through the client terminal 20 with respect to the client terminal 20.

As a result, the client terminal 20 may increase the probability of winning for the item contents desired by the user by drawing the residual capsules other than capsules which are not associated with the item contents desired by the user by paying a predetermined expense.

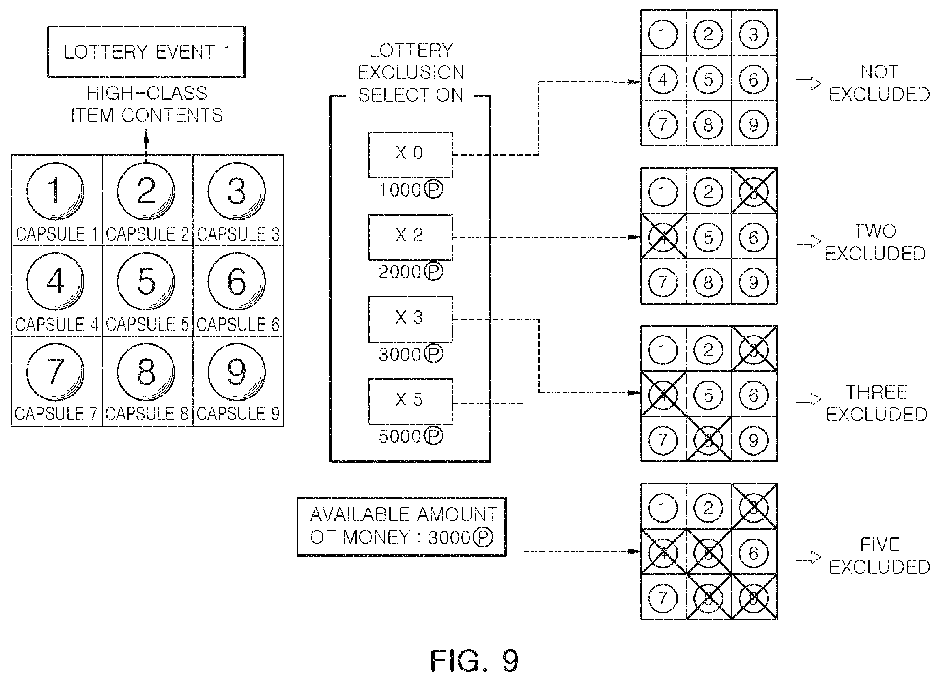

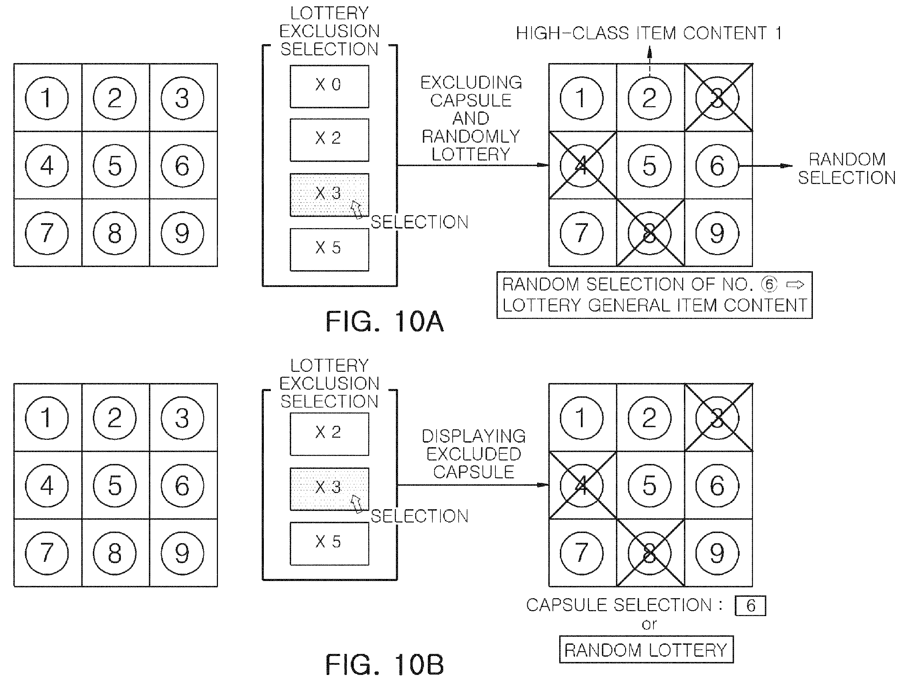

Hereinafter, the aforementioned configuration will be described in more detail through FIGS. 9 and 10 with reference to FIG. 4.

First, the lottery event output unit 131 may output the plurality of capsules included in the lottery event information to the client terminal 20 as illustrated in FIG. 9 in order to provide the lottery event depending on the lottery event information to the corresponding client terminal 20.

Further, the lottery excluding unit 132 may identify one or more capsules which match the item contents included in the lottery event information and classify the residual capsules other than the identified capsules as excludable capsules.

As a result, the lottery excluding unit 132 may provide a user interface for receiving the number of excluded capsules from the client terminal 20 with respect to the excludable capsules as illustrated in FIG. 9.

In this case, the lottery excluding unit 132 may display both the game money which is charged according to the number of excluded capsules and the game money possessed by the user from the member information corresponding to the user of the client terminal 20.

Thereafter, the lottery excluding unit 132 may receive the number of excluded capsules based on the user input information received from the client terminal 20 and exclude one or more capsules according to the number of capsules corresponding to the user input information among the excludable capsules.

As one example, the lottery excluding unit 132 may exclude 2 capsules when the number of excluded capsules is input as 2 and 5 capsules when the number of excluded capsules is input as 5 as illustrated in FIG. 9. In this case, the lottery excluding unit 132 may remove the excluded capsule or process to the client terminal 20 not to select the excluded capsules and provide information on the capsules excluded from the lottery to the client terminal 20.

Thereafter, the lottery excluding unit 132 and the winning verifying unit 133 perform the lottery with respect to the residual capsules other than the excluded capsules and this will be described in detail with reference to FIG. 10.

First, as illustrated in FIG. 10A, the lottery excluding unit 132 may randomly select one or more capsules among the residual capsules immediately after excluding the capsules and provide the selected capsules to the lottery verifying unit 133.

Further, as illustrated in FIG. 10B, the lottery excluding unit 132 may display the excluded capsules after excluding the capsules and receive selection information related to any one capsule among the residual capsules from the client terminal 20 and the lottery excluding unit 132 may transmit the capsules selected according to the selection information to the lottery verifying unit 133. In this case, any one capsule among the residual capsules may be randomly selected through the selection information.

As a result, the lottery verifying unit 133 may provide to the client terminal 20 according to whether a capsule selected based on matching information included in the lottery event information matching the item contents, the item contents matching the capsule as the winning information.

In this case, the lottery excluding unit 132 may repeatedly receive the user input information and the selection information until the item contents are won, and as a result, even when the selected capsule does not match the item contents, and as a result, the item contents are not won, the lottery excluding unit 132 may continuously exclude or draw the capsule to particularly win the item contents.

Therefore, when the lottery excluding unit 132 continuously excludes the capsule, the probability of winning of the item contents may be continuously increased.

Meanwhile, the item registering unit 134 registers the won item content provided as the winning information in the member information of the member DB 310 corresponding to the user of the client terminal to allow the user to use the corresponding item contents in the online game.

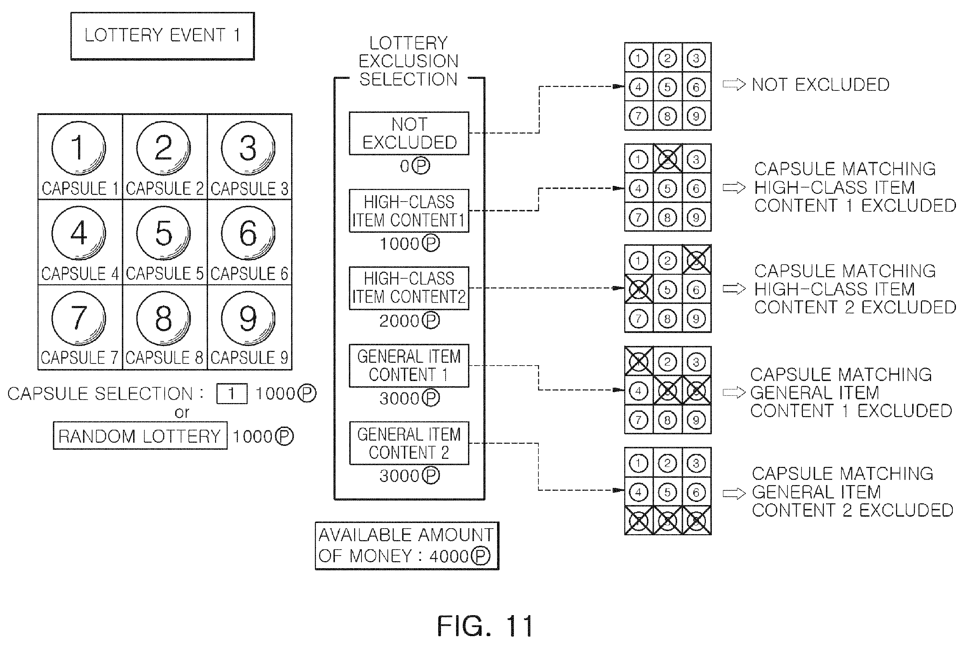

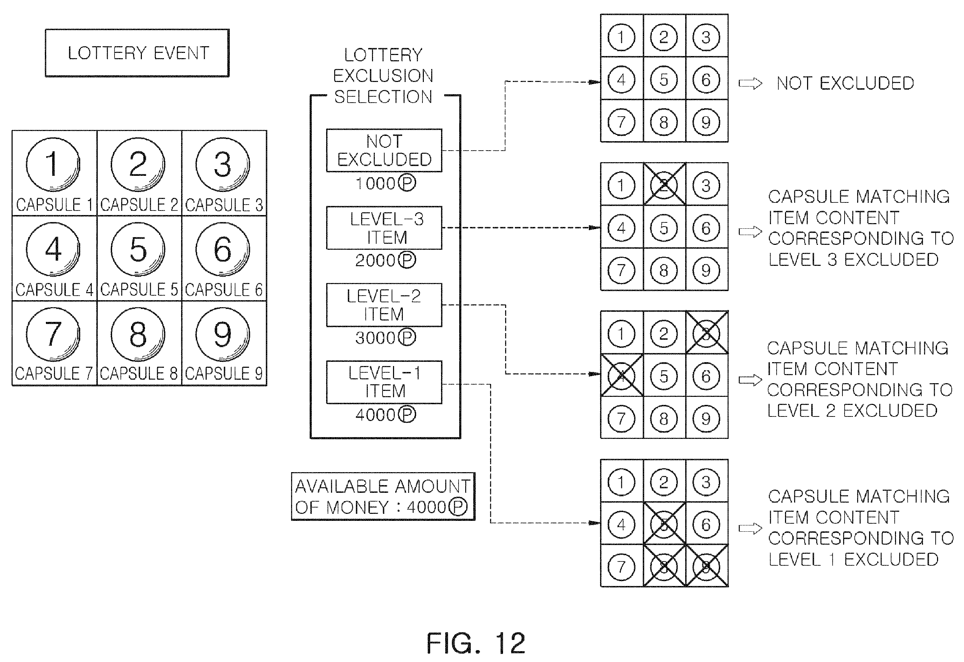

Based on the aforementioned configuration, the online lottery system for varying the probability of winning according to the present invention may selectively provide the item contents desired by the user through the lottery by supporting various capsule excluding schemes and an embodiment thereof will be described with reference to FIGS. 11 and 12.

First, as illustrated in FIG. 11, the lottery event generating unit 140 matches a plurality of different item contents with one or more capsules, respectively to generate the lottery event information and configure the lottery event information so that there is no mismatched capsule.

Further, the lottery event providing unit 120 may provide detailed information related to each item content included in the lottery event information to the plurality of client terminals 20 and the user of each client terminal 20 may participate in the lottery event including the desired item contents.

Meanwhile, the lottery event output unit 131 may output the lottery event depending on the lottery event information to the client terminal 20.

In this case, the lottery excluding unit 132 may set the capsule matching each item content included in the lottery event information as the excludable capsule, and as a result, the item contents not desired by the user may be excluded from the lottery.

To this end, the lottery excluding unit 132 may provide a user interface for receiving the user input information related to the item contents not desired by the user.

As a result, when the lottery excluding unit 132 receives user input information related to high-class item content 1 among items included in the lottery event information as illustrated in FIG. 11, the lottery excluding unit 132 may exclude a capsule matching the high-class item content 1 from the lottery. Further, when the lottery excluding unit 132 receives user input information related to general item content 1, the lottery excluding unit 132 may exclude a plurality of capsules matching the general item content 1 from the lottery.

In this case, item contents having a higher scarcity value preferably match a smaller number of capsules, and as a result, since a smaller number of capsules are excluded as the item contents have the higher scarcity value, it is preferable to set charging of a low price.

Thereafter, the lottery excluding unit 132 performs the lottery for the residual capsules as described above to provide the selected capsule to the winning verifying unit 133 and the winning verifying unit 133 may provide the item contents matching the selected capsule to the client terminal 20 as the winning information. Various other embodiments of the lottery process have been described in FIGS. 5 and 6.

As a result, the lottery excluding unit 132 excludes the capsule matching the excluded item contents from the lottery to increase winning probabilities for other item contents.

Besides, in the item contents, any one of a plurality of levels classified according to capability values granted to the game content providing server 200 may be previously set and the lottery event generating unit 110 match the plurality of item contents with the capsules, respectively to generate the lottery event information and may generate the lottery event information so that the lottery event information includes at least one of item contents corresponding to different levels from other item contents.

As a result, the lottery excluding unit 132 identifies a level previously set in each item content to provide a user interface for receiving the level as the user input information in order to exclude a capsule matching an item content not desired by the user from the lottery as illustrated in FIG. 12.

As a result, the lottery excluding unit 132 may exclude a capsule matching an item content corresponding to a level selected based on the user input information from the lottery and perform the lottery with respect to the residual capsules.

Therefore, the item content of the level not desired by the user is not won and a probability of winning for the item content of the level desired by the user may be increased.

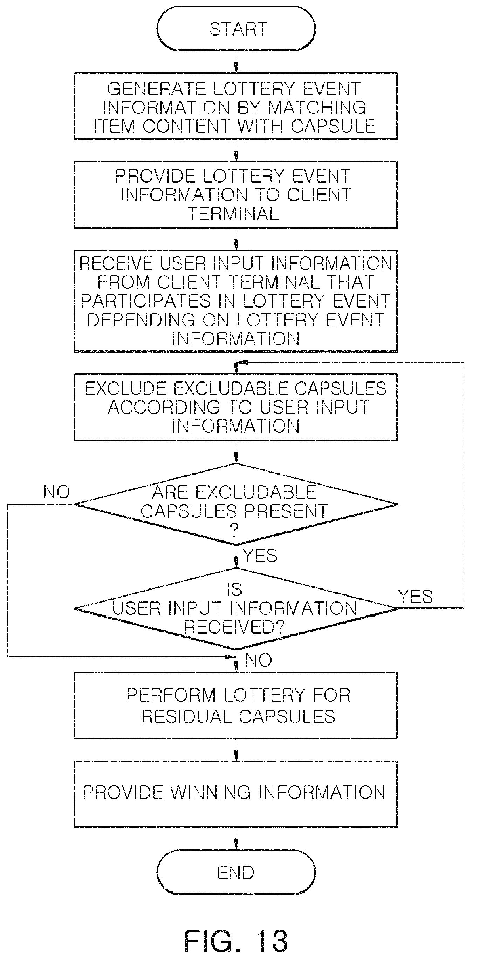

FIG. 13 is a flowchart of an online lottery method for varying a probability of winning of the lottery server according to another embodiment of the present invention and as described above, the lottery event generating unit 140 matches one or more item contents with one or more capsules among a predetermined number of capsules by interworking with the game content providing server 200 to generate the lottery event information.

Thereafter, the lottery event providing unit 120 may provide one or more lottery event information generated by controlling the lottery event generating unit 140 to each client terminal.

Next, the lottery control unit 130 may receive the user input information for excluding one or more capsules from the lottery so as to increase the probability of winning of the selected capsule from the client terminal with respect the client terminal that participates in the lottery depending on the lottery event information.

In this case, the lottery control unit 130 may receive the user input information until all excludable capsules are exhausted.

Thereafter, the lottery control unit 130 matches at least one of the residual capsules to provide an item content which matches the capsule according to whether the capsule and the item content matching each other as the winning information.

## Claims

1. An online lottery system for varying a probability of winning, which interworks with a game content providing server providing item contents used in an online game to provide the item contents by a lottery scheme, the system comprising:
a lottery event generating unit generating lottery event information by extracting the plurality of item contents to be provided through a lottery;
a lottery event providing unit providing one or more lottery event information generated by controlling the lottery event generating unit to each client terminal; and
a lottery control unit increasing the probability of winning for the item contents which is the lottery target by excluding from a lottery target one or more item contents selected according to user input information of the client terminal among the plurality of item contents included in the lottery event information with respect to the client terminal that participates in the lottery depending on the lottery event information.

2. The online lottery system of claim 1, wherein the lottery control unit randomly automatically selects one or more item contents with respect to the item contents as the lottery target and provides the selected item contents as winning information to the client terminal that participates in the lottery.

3. The online lottery system of claim 2, wherein the lottery control unit registers the item contents provided as the winning information in member information stored in a member server to use the item contents in an online game.

4. The online lottery system of claim 1, wherein the lottery control unit resets the lottery event information when all of the item contents included in the lottery event information are exhausted or the client terminal that participates in the lottery completes the lottery event depending on the lottery event information.

5. The online lottery system of claim 1, wherein the plurality of item contents are constituted by different item contents or at least one item content is constituted by different item contents.

6. The online lottery system of claim 1, wherein the lottery event providing unit provides, to each client terminal, information on the item contents included in the lottery event information.

7. An online lottery method for varying a probability of winning, of an online lottery server which interworks with a game content providing server providing item contents used in an online game to provide the item contents by a lottery scheme, the method comprising:
a first step of generating lottery event information by extracting the plurality of item contents to be provided through a lottery;
a second step of providing one or more lottery event information generated through the first step to each client terminal; and
a lottery control unit increasing the probability of winning for the item contents which is the lottery target by excluding from a lottery target one or more item contents selected according to user input information of the client terminal among the plurality of item contents included in the lottery event information with respect to the client terminal that participates in the lottery depending on the lottery event information.

8. An online lottery system for varying a probability of winning, which interworks with a game content providing server providing item contents used in an online game to provide the item contents by a lottery scheme, the system comprising:
a lottery event generating unit generating lottery event information by matching one or more item contents with one or more capsules among a predetermined number of capsules;
a lottery event providing unit providing one or more lottery event information generated by controlling the lottery event generating unit to each client terminal; and
a lottery control unit excluding one or more capsules from a lottery according to user input information of the client terminal so as to increase winning probabilities for the item contents with respect to a client terminal that participates in the lottery depending on the lottery event information.

9. The online lottery system of claim 8, wherein the lottery control unit provides the matched item content as winning information according to whether a capsule selected by performing the lottery for the residual capsules other than the capsules excluded from the lottery matching an item content.

10. The online lottery system of claim 9, wherein the lottery control unit registers the item contents provided as the winning information in member information stored in a member server to use the item contents in an online game.

11. The online lottery system of claim 9, wherein the lottery control unit performs the lottery by selecting at least one capsule according to selection information of the client terminal or randomly automatically selecting at least one capsule.

12. The online lottery system of claim 8, wherein the lottery control unit removes the capsule excluded from the lottery or prevents the corresponding capsule from being selected.

13. The online lottery system of claim 8, wherein the lottery control unit resets the lottery event information when all of the item contents included in the lottery event information are won or the client terminal completes the lottery event depending on the lottery event information.

14. The online lottery system of claim 8, wherein the lottery event generating unit matches a plurality of different item contents with one or more capsules, respectively to generate the lottery event information.

15. The online lottery system of claim 14, wherein the lottery control unit excludes one or more capsules matching the item contents selected according to the user input information from the lottery to increase winning probabilities for other item contents.

16. The online lottery system of claim 8, wherein the lottery event providing unit provides, to each client terminal, information on the item contents included in the lottery event information.

17. The online lottery system of claim 8, wherein:
in the item contents, any one of a plurality of levels classified according to capability values granted to the game content providing server is previously set, and
the lottery event generating unit matches the plurality of item contents with the capsules, respectively to generate the lottery event information and generates the lottery event information so that the lottery event information includes at least one of item contents corresponding to different levels from other item contents.

18. The online lottery system of claim 17, wherein the lottery control unit excludes capsules matching one or more item contents corresponding to a level selected according to the user input information from the lottery.

19. The online lottery system of claim 8, wherein the item contents are high-class item contents of which capability values measured in the online game are equal to or more than a predetermined value.

20. An online lottery method for varying a probability of winning, of an online lottery server which interworks with a game content providing server providing item contents used in an online game to provide the item contents by a lottery scheme, the method comprising:
a first step of generating lottery event information by matching one or more item contents with one or more capsules among a predetermined number of capsules by interworking the game content providing server;
a second step of providing one or more lottery event information generated through the first step to each client terminal; and
a third step of excluding one or more capsules selected according to user input information of a client terminal that participates in a lottery depending on the lottery event information from a lottery target,
wherein the second step includes restricting another client terminal to participate in the same lottery event information when the lottery event information is allocated to any one client terminal.
